# EUROPEAN PATENT APPLICATION

(11) **EP 4 668 127 A1**
(43) Date of publication of application: **24.12.2025**
(21) Application number: 23926059.9
(22) Date of filing: 04.12.2023
(51) Int. Cl.: G06F 16/22, G06F 16/25

(54) **DATA PROCESSING METHOD AND APPARATUS**

(30) Priority: 09.03.2023 CN 202310226588
(71) Applicant: Huawei Cloud Computing Technologies Co., Ltd., Guiyang, Guizhou 550025 (CN)
(72) Inventor: WANG, Feihuo, Guiyang, Guizhou 550025 (CN); WU, Wenbo, Guiyang, Guizhou 550025 (CN)
(74) Representative: Goddar, Heinz J.
(86) International application number: PCT/CN2023/136251
(87) International publication number: WO 2024/183365

(57) **Abstract**

This application relates to the field of big data technologies, and provides a data processing method and apparatus, to improve data query efficiency. The method includes: receiving a query request, determining, based on metadata information, at least one index corresponding to the query request, and querying data from a database based on the at least one index without traversing all data in the database. This reduces a traversal range in a data query process and improves data query efficiency.

## Description

### CROSS-REFERENCE TO RELATED APPLICATIONS

This application claims priority to Chinese Patent Application No. 202310226588.1, filed with the China National Intellectual Property Administration on March 9, 2023 and entitled "DATA PROCESSING METHOD AND APPARATUS", which is incorporated herein by reference in its entirety.

### TECHNICAL FIELD

Embodiments of this application relate to the field of big data technologies, and in particular, to a data processing method and apparatus.

### BACKGROUND

To meet increasing data storage requirements of users, cloud storage services gradually emerge. A user may write, through a terminal device, data to a storage system established by a service provider by using the cloud storage service. The storage system may store data in a form of a database. When the user needs to use data, the user may send a query request to the storage system through the terminal device. After receiving the query request, the storage system reads the data required by the user from the database.

Currently, the storage system needs to traverse the data in the database based on the query request, to obtain the data that meets the query request. It takes a long time to traverse the database. As a result, data query efficiency is low.

### SUMMARY

Embodiments of this application provide a data processing method and apparatus, to improve data query efficiency.

According to a first aspect, an embodiment of this application provides a data processing method. The method may be performed by a data processing apparatus. The data processing apparatus may be implemented by one or more computing devices, or the data processing apparatus may be implemented by a software or hardware module in a computing device. An implementation form of the data processing apparatus is not limited in embodiments of this application. The method includes: A data processing apparatus receives a query request, where the query request indicates at least one field to which to-be-queried data belongs; determines, based on metadata information, at least one index corresponding to the query request, where the metadata information indicates a relationship between an index and data corresponding to a plurality of fields, and the plurality of fields include the at least one field; queries, from a database, N groups of data associated with the at least one index, where the database includes a plurality of indexes and at least one group of data corresponding to the plurality of fields associated with each of the plurality of indexes, the plurality of indexes are ordered in the database, and N is a positive integer; and sends a query result, where the query result indicates the N groups of data.

In this embodiment of this application, the data processing apparatus determines the at least one index corresponding to the query request. In other words, the at least one index specifies a search range. Therefore, the data corresponding to the at least one index may be directly determined from the database. In this way, there is no need to traverse all data in the database one piece by one piece, thereby improving data query efficiency. In addition, the data processing apparatus can feed back the query result more quickly. This helps improve user experience.

In a possible implementation, the database includes a first table and a second table, the first table and the second table are configured to store the plurality of indexes and at least one group of data corresponding to the plurality of fields associated with each of the plurality of indexes, and a data amount of the first table is less than a data amount of the second table; and querying, from the database, the N groups of data associated with the at least one index includes: querying the first table for a group of data associated with each of the at least one index, to obtain K groups of data in total, where K is a positive integer; and querying the second table for a group of data that is the same as each of the K groups of data, to obtain L groups of data in total, where L is a non-negative integer, and the N groups of data include the K groups of data and the L groups of data.

In the foregoing implementation, the data processing apparatus may first query a table (for example, the first table) with a small data amount for the K groups of data corresponding to the at least one index, and query, based on the K groups of data, a table (for example, the second table) with a large data amount for data that is the same as each group of data in the K groups of data. In one aspect, the first table has a small data amount, so that the K groups of data can be quickly queried. This helps improve data query efficiency. In addition, after obtaining the K groups of data in the first table, the data processing apparatus may quickly obtain the L groups of data based on the K groups of data, to implement joint access to a plurality of tables, and also help improve data query efficiency.

In a possible implementation, the data processing apparatus includes a first thread and a second thread, and the first thread is configured to query, from the first table, the group of data associated with each of the at least one index; and querying, from the second table, the group of data that is the same as each of the K groups of data includes: sending the K groups of data to the second thread through the first thread; and querying, through the second thread from the second table, the group of data that is the same as each of the K groups of data.

In the foregoing implementation, the data processing apparatus may separately query data from the plurality of tables by using a plurality of threads, and the plurality of threads may share a processing amount of the queried data. This helps implement load balancing of the plurality of threads, and improve data query efficiency.

In a possible implementation, before determining, based on the metadata information, the at least one index corresponding to the query request, the method further includes: receiving, from a source device, the plurality of indexes and the at least one group of data corresponding to the plurality of fields associated with each of the plurality of indexes; and extracting a relationship between the plurality of indexes and the at least one group of data corresponding to the plurality of fields, to obtain the metadata information, and storing the metadata information.

In the foregoing implementation, the data processing apparatus may automatically identify the relationship between the plurality of indexes and the at least one group of data corresponding to the plurality of fields, to obtain the metadata information. This provides a manner in which the data processing apparatus determines the metadata information.

In a possible implementation, the data processing apparatus includes at least one interface, and one interface supports one communication protocol. Receiving the plurality of indexes and the at least one group of data corresponding to the plurality of fields associated with each of the plurality of indexes includes: determining, from the at least one interface, a target interface that matches a communication protocol of a source device or a data storage apparatus; and receiving, from the source device or the data storage apparatus through the target interface, the plurality of indexes corresponding to the plurality of fields and the at least one group of data corresponding to the plurality of fields associated with each of the plurality of indexes.

In a possible implementation, the query request includes multi-level query requests, each level of query request in the multi-level query requests indicates a part of the at least one field, the metadata information indicates a relationship between each level of index in multi-level indexes and data corresponding to a part of the plurality of fields, and each level of query request in the multi-level query requests corresponds to a level-1 index in the multi-level indexes; and determining, based on the metadata information, the at least one index corresponding to the query request includes: determining, based on the relationship between each level of index in the multi-level indexes and the part of the plurality of fields, a value range of the level-1 index corresponding to each level of query request in the multi-level query requests, and obtaining value ranges of the multi-level index in total, where the at least one index is an intersection of the value ranges of the multi-level indexes.

In the foregoing implementation, a scenario in which data is queried by using the multi-level query requests may be supported. In other words, the foregoing implementation can support more data query scenarios, so that the foregoing implementation has good applicability.

In a possible implementation, each level of query request further indicates a value range of data corresponding to the part of the at least one field; and determining the value range of the level-1 index corresponding to each level of query request in the multi-level query requests includes: determining, based on a value range of data corresponding to each field in the part of the at least one field indicated by each level of query request, the value range of the level-1 index corresponding to each level of query request.

In the foregoing implementation, each level of query request further indicates the value range of the data corresponding to the corresponding field. The data processing apparatus may directly determine, based on the value range of the data indicated by each level of query request, the value range of the level-1 index corresponding to a level of query request. A manner of determining the value range of each level of index is provided, and the manner of determining the value range of each level of index is simple.

According to a second aspect, an embodiment of this application provides a data processing apparatus. The data processing apparatus may be the data processing apparatus in the first aspect, or may implement a same function as the data processing apparatus in the first aspect. The data processing apparatus includes a corresponding means (means) or module for executing the first aspect or any possible implementation. For example, the data processing apparatus includes a query request parsing module (sometimes also referred to as a query request parsing unit) and a data query module (sometimes also referred to as a data query unit). Optionally, the data processing apparatus further includes a metadata storage module (also referred to as a metadata storage unit).

For example, the query request parsing module is configured to: receive a query request, where the query request indicates at least one field to which to-be-queried data belongs; and determine, based on metadata information, at least one index corresponding to the query request, where the metadata information indicates a relationship between an index and data corresponding to a plurality of fields, and the plurality of fields include the at least one field; the data query module is configured to query, from a database, N groups of data associated with the at least one index, where the database includes a plurality of indexes and at least one group of data corresponding to the plurality of fields associated with each of the plurality of indexes, the plurality of indexes are ordered in the database, and N is a positive integer; and the query request parsing module is further configured to send a query result, where the query result indicates the N groups of data.

Optionally, the data processing apparatus further includes another component, for example, an antenna, an input/output module, or an interface. The component may be hardware, software, or a combination of software and hardware.

According to a third aspect, an embodiment of this application provides a computing device, including a processor and a memory. The memory is configured to store one or more computer programs. The one or more computer programs include computer instructions. When the processor executes the computer instructions, the method according to any one of the first aspect and the possible implementations is performed.

According to a fourth aspect, an embodiment of this application provides a computing device cluster, including at least one computing device. Each computing device includes a processor and a memory. The processor of the at least one computing device is configured to execute instructions stored in the memory of the at least one computing device, so that the computing device cluster performs the method according to any one of the first aspect and the possible implementations.

According to a fifth aspect, an embodiment of this application provides a computer-readable storage medium. The computer-readable storage medium is configured to store a computer program or instructions. When the computer program or the instructions are run, the method according to any one of the first aspect and the possible implementations is implemented.

According to a sixth aspect, an embodiment of this application provides a computer program product including instructions. When the computer program product runs on a computer, the computer program product implements the method according to any one of the first aspect and the possible implementations.

For beneficial effect of the second aspect to the sixth aspect, refer to the beneficial effect described in the first aspect. Details are not described herein again.

### BRIEF DESCRIPTION OF DRAWINGS

FIG. 1 is a diagram of a scenario to which an embodiment of this application is applicable;
FIG. 2 is a diagram of a table;
FIG. 3 is a diagram of a data processing method according to an embodiment of this application;
FIG. 4 is a diagram of target data according to an embodiment of this application;
FIG. 5 is a diagram of a method for determining at least one index according to an embodiment of this application;
FIG. 6 is a diagram of data included in a database according to an embodiment of this application;
FIG. 7 is a diagram of a method for determining N groups of data according to an embodiment of this application;
FIG. 8A and FIG. 8B are a diagram of a process of joining tables for data query according to an embodiment of this application;
FIG. 9 is a diagram of a structure of a data processing apparatus according to an embodiment of this application;
FIG. 10 is a diagram of a structure of a computing device according to an embodiment of this application; and
FIG. 11 is a diagram of a structure of a computing device cluster according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in the embodiments of this application, to help a person skilled in the art have a better understanding.
1. A terminal device is a device with a wireless transceiver function, and may be a stationary device, a mobile device, a handheld device, a wearable device, a vehicle-mounted device, or a built-in wireless apparatus (for example, a communication module or a chip system) of the foregoing device. The terminal device is configured to connect people, things, machines, and the like, and may be widely used in various scenarios. For example, the terminal device includes but is not limited to terminal devices in the following scenarios: cellular communication, device-to-device (device-to-device, D2D), vehicle-to-everything (vehicle-to-everything, V2X), machine-to-machine/machine type communication (machine-to-machine/machine type communication, M2M/MTC), internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, a smart wearable, smart transportation, a smart city (smart city), an uncrewed aerial vehicle, a robot, and the like. The terminal device may be sometimes referred to as a user equipment (user equipment, UE), a terminal, an access station, a UE station, a remote station, a wireless communication device, a user apparatus, or the like.
2. A computing device is a device having a computing capability, for example, a terminal device or a server (server). The server may be generally used as a device that provides a service for a user. For example, the server may provide a storage service and/or a computing service for a user.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. At least one of the following items (pieces) or a similar expression thereof refers to any combination of these items, including any combination of singular items (pieces) or plural items (pieces). For example, at least one of a, b, or c indicates a, b, c, a and b, a and c, b and c, or a, b, and c, where a, b, and c may be singular or plural.

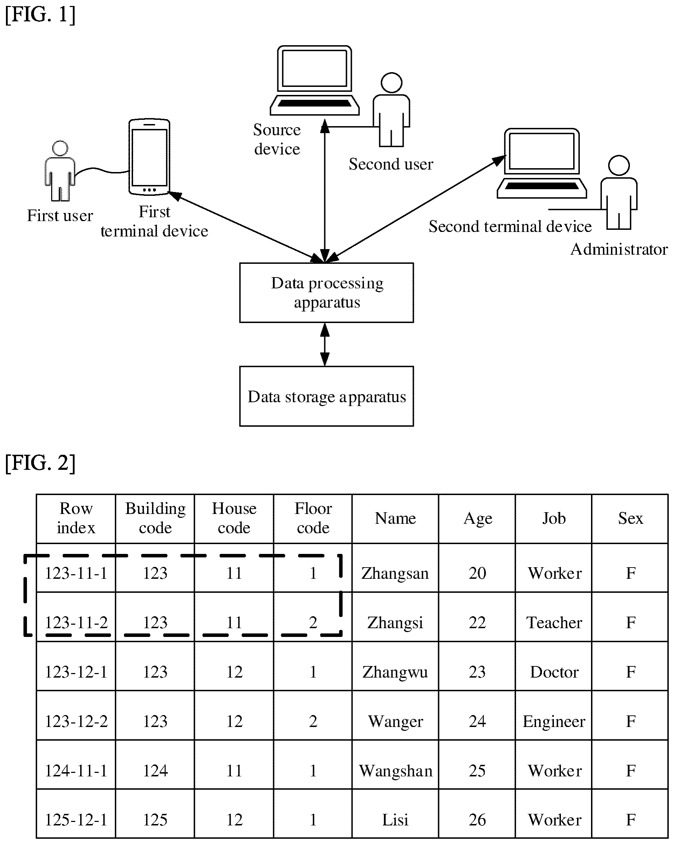

FIG. 1 is a diagram of a scenario to which an embodiment of this application is applicable. As shown in FIG. 1, the scenario includes a source device, a first terminal device, a data processing apparatus, and a data storage apparatus. The data processing apparatus and the data storage apparatus may form a data storage system. The first terminal device may correspond to a first user. In other words, the first user may perform an operation on the first terminal device. The source device corresponds to a second user. In other words, the second user may perform an operation on the source device. The source device may be implemented by using a computing device. The data storage apparatus may be a data storage apparatus in a centralized architecture or a data storage apparatus in a distributed architecture. This is not specifically limited in this embodiment of this application.

The data processing apparatus may separately communicate with the first terminal device and the data storage apparatus. Communication is, for example, wired communication or wireless communication. The data processing apparatus may also be referred to as an engine, and the engine may include a structured query language (structured query language, SQL) engine.

For example, if the second user expects to write data (which may be referred to as source data), the source device may generate a write request based on an operation of the second user, and the write request is used to request to write the source data. The source device may send the write request to the data processing apparatus. The data processing apparatus may be configured to process the write request, where the write request is used to request to write the source data. After receiving the write request, the data processing apparatus may write the source data into the data processing apparatus.

The first user expects to query to-be-queried data, and the first terminal device may generate a query request based on an operation of the first user. The query request is used to request to query the to-be-queried data. The first terminal device may send the query request to the data processing apparatus. The data processing apparatus processes the query request. The query request is used to request to query the to-be-queried data. The data processing apparatus queries a database in the data storage apparatus for the data based on the query request, and sends the data obtained through query to the first terminal device.

Optionally, the first terminal device may run an application. The application generates a query request based on an operation of the first user, and sends the query request to the data processing apparatus. The application is, for example, an application pre-installed in the first terminal device, a sub-application embedded in a third-party application disposed in the first terminal device, an applet, or a web page. After the data processing apparatus obtains the data through query, the first terminal device may send the data obtained through query to the application.

In FIG. 1, an example in which the source device and the first terminal device are different devices is used. Actually, the source device and the first terminal device may be a same device. This is not limited in this embodiment of this application.

In a possible implementation, the data processing apparatus and the data storage apparatus may be separately implemented by using different devices. For example, the data processing apparatus may be implemented by using one or more computing devices, or may be implemented by using a software module or a hardware module in one or more computing devices. The data processing apparatus may be implemented by using one or more storage devices, or may be implemented by using a software module or a hardware module in one or more storage devices. The storage device is a device having a storage capability, and includes but is not limited to a hard disk, a magnetic disk, a solid state disk (solid state disk, SSD), or the like. The data processing apparatus is implemented by using a computing device cluster, and the data storage apparatus is implemented by using another computing device cluster. One computing device cluster includes, for example, one or more servers.

In another possible implementation, the data processing apparatus and the data storage apparatus may be implemented by using a same computing device or a same computing device cluster. For example, both the data processing apparatus and the data storage apparatus are software modules in a same computing device.

Optionally, the scenario may further include a second terminal device. The second terminal device corresponds to an administrator. In other words, the administrator may perform an operation on the second terminal device. For example, the administrator may access the data processing apparatus by using the second terminal device, to update information in the data processing apparatus.

The following uses the scenario shown in FIG. 1 as an example, and uses an example in which the database in the data storage apparatus includes the table shown in FIG. 2 and an identifier of the table is t1 to describe a current data query process.

As shown in FIG. 2, the table includes a plurality of fields (for example, a row index (rowkey), a building code (building_code), a house code (house_code), a floor code (floor_code), a name (name), an age (age), a job (job), and a gender (gender) in FIG. 2), and data corresponding to each of the plurality of fields. One piece of data corresponding to each of the plurality of fields may be considered as one value of each field.

The following uses an example in which the query request is select * from t1 where building_code = '123' and house_code = 11 and the data processing apparatus queries data from the table shown in FIG. 2.

After the data processing apparatus receives the query request from the first terminal device, the data processing apparatus may sequentially traverse, based on the query request, each row of data in the table shown in FIG. 2. Specifically, the data processing apparatus may first traverse whether building_code in a second row of the table is 123 and whether house_code in the second row is 11; traverse whether building_code in a third row is 123 and whether house_code in the third row is 11; and traverse whether building_code in a fourth line is 123 and whether house_code in the fourth line is 12. By analogy, until the data processing apparatus traverses each row of data in the table, the data processing apparatus can obtain, from FIG. 2 through screening, data that meets the query request, and obtain a query result. The query result is two rows of data shown in a dashed box in FIG. 2 (one row of data indicates that a row index is 123-11-1, a building code is 123, a house code is 11, and a floor code is 1; and another row of data indicates that the row index is 123-11-2, the building code is 123, the house code is 11, and the floor code is 2). After obtaining the query result, the data processing apparatus may send the query result to the first terminal device. It can be learned that, in a current data query manner, the data processing apparatus needs to traverse all data in the data storage apparatus. Consequently, query efficiency of the data processing apparatus is low. Further, if the data processing apparatus stores more data, data query efficiency is further reduced.

In view of this, an embodiment of this application provides a data processing method. In the method, after a query request is received, at least one index corresponding to the query request may be determined. This is equivalent to determining a data range corresponding to current query. Because indexes are ordered in a database, data associated with the at least one index can be quickly queried from the database. In this way, all data in the data storage apparatus does not need to be traversed, and a data query range is narrowed without affecting accuracy of the query result. This helps improve data query efficiency.

The following describes the method provided in embodiments of this application with reference to the accompanying drawings. In the accompanying drawings corresponding to embodiments of this application, all steps represented by using dashed lines are optional steps. The data processing apparatus in embodiments of this application is, for example, the data processing apparatus in FIG. 1. The data storage apparatus is, for example, the data storage apparatus in FIG. 1. The source device is, for example, the source device in FIG. 1. The first terminal device is, for example, the first terminal device in FIG. 1. The second terminal device is, for example, the second terminal device in FIG. 1.

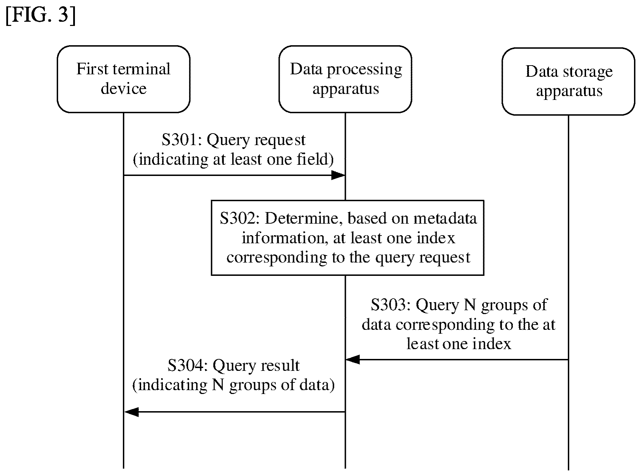

FIG. 3 is a schematic flowchart of a data processing method according to an embodiment of this application. The method includes the following steps.

S301: The first terminal device sends a query request to the data processing apparatus. Correspondingly, the data processing apparatus receives the query request from the first terminal device.

The query request indicates at least one field to which to-be-queried data belongs. In other words, the query request is used to request to query data corresponding to the at least one field, or it may be understood that the query request is used to request to query the data corresponding to the at least one field. Optionally, the query request may include a query statement, and the query statement is used to indicate the at least one field. A language used by the query statement is SQL. In this case, the query statement may also be referred to as an SQL statement.

For example, the query request includes the query statement, and the query statement is building_code and house_code. The query request is equivalent to indicating two fields: building_code and house_code. It may be further understood that the query request is used to query data corresponding to the two fields.

Optionally, the query request may further indicate a value range of data corresponding to each of a part of or all of the at least one field. When the query request includes the query statement, the query statement may indicate the at least one field, and may further indicate a value range of data corresponding to each of the part of or all of the at least one field.

For example, the query request includes the query statement, and the query statement is building_code=123 and house_code=11. The query statement is equivalent to indicating two fields: building_code and house_code, and further indicates value ranges of data corresponding to the two fields. A value range of data corresponding to the field building_code is equal to 123, and a value range of data corresponding to the field house_code is equal to 11.

The query request may be a level-1 query request or multi-level query requests, which are separately described below.

A1. The query request is the level-1 query request.

The level-1 query request indicates at least one field. Optionally, the level-1 query request may further indicate a value range of data corresponding to each of a part of or all of the at least one field.

A2. The query request is multi-level query requests.

The multi-level query requests are equivalent to indicating at least one field together (or jointly). For example, each level of query request in the multi-level query requests indicates a part of the at least one field. Optionally, each level of query request in the multi-level query requests may further indicate a value range of data corresponding to each of the part of the at least one field.

Optionally, each level of query request in the multi-level query requests may include a query statement. In this case, the query statement in each level of query request in the multi-level query requests may indicate the part of the at least one field, and may further indicate the value range of the data corresponding to each of the part of the at least one field.

S302: The data processing apparatus determines, based on metadata information, at least one index corresponding to the query request.

The metadata information indicates a relationship between an index and data corresponding to a plurality of fields. In other words, the index is related to the data corresponding to the plurality of fields. Information about the relationship between the index and the data corresponding to the plurality of fields may also be referred to as index information. The metadata information may be further understood as indicating a rule for generating an index for the data corresponding to the plurality of fields. In other words, if the data processing apparatus determines a group of data corresponding to the plurality of fields, the data processing apparatus can determine, based on the group of data and the metadata information, an index corresponding to the group of data. The index may be understood as indicating at least one group of data corresponding to the plurality of fields. For example, the metadata information may indicate that the index is obtained by sequentially connecting the data corresponding to the plurality of fields by using delimiters. Alternatively, the metadata information may indicate that the index is obtained by sequentially arranging the data corresponding to the plurality of fields.

Because the index in this embodiment of this application is related to the data corresponding to the plurality of fields, the index in this embodiment of this application may also be referred to as a combination index. Based on different forms of the at least one group of data indicated by the index, the index may be classified into a row index or a column index. The row index means that a form of each group of data in the at least one group of data indicated by the index is a row. The column index means that a form of each group of data in the at least one group of data indicated by the index is a column.

The index may be a level-1 index or multi-level indexes. If the index is the multi-level indexes, the metadata information may indicate information about the multi-level indexes. Information about each level of index in the information about the multi-level indexes indicates a relationship between each level of index and data corresponding to a part of the plurality of fields. Optionally, when the query request includes the multi-level query requests, each level of query request in the multi-level query requests may correspond to information about the level-1 index in the multi-level indexes.

For example, the multi-level indexes include the level-1 index and a level-2 index, and the level-1 index indicates that the data corresponding to the plurality of fields is obtained by sequentially connecting the data by using delimiters. Alternatively, the metadata information may indicate that the index is obtained by sequentially arranging the data corresponding to the plurality of fields.

In addition to indicating the relationship between the index and the data corresponding to the plurality of fields, the metadata information may further indicate one or more of a data source identifier, a level of the index, a data source type, a data amount of a table, and a table identifier.

The data source identifier indicates a source of data, for example, an address of a source device into which the data can be written. The data amount of the table is an amount of data included in the table. The data source type indicates a source device type. The table identifier indicates an identifier of a table including the data.

For example, Table 1 shows an example of the metadata information according to an embodiment of this application.

**Table 1**

| Data source identifier | Data source type | Table identifier | Level-1 index information | Level-2 index information |
|---|---|---|---|---|
| 12 | A | 2341 | building_code-house_code-floor_code | name-age-job-gender |

As shown in Table 1, the metadata information indicates that the data source identifier is 12, the data source type is A, the table identifier is 2341, the level-1 index information indicates that the level-1 index is formed by connecting, by using delimiters, data corresponding to three fields: building_code, house_code, and floor_code, and the level-2 index information indicates that the level-2 index is formed by connecting, by using delimiters, data corresponding to four fields: name, age, job, and gender.

Before the data processing apparatus performs S302, the data processing apparatus may obtain and prestore the metadata information. The following describes a manner in which the data processing apparatus obtains the metadata information.

Manner 1: The data processing apparatus obtains the metadata information based on input of an administrator.

For example, the source device sends a write request to the data processing apparatus. The write request is used to request to write a plurality of indexes and at least one group of data corresponding to a plurality of fields associated with each of the plurality of indexes. For ease of description, in this embodiment of this application, the plurality of indexes and the at least one group of data corresponding to the plurality of fields associated with each of the plurality of indexes are referred to as target data. Alternatively, the data processing apparatus has written the target data into a database. In either case, the administrator may access the target data through the second terminal device. In this way, the administrator may determine, based on the target data, a relationship between the index and the data corresponding to the plurality of fields, to obtain the metadata information. The administrator may input the metadata information into the second terminal device, and the second terminal device sends the metadata information to the data processing apparatus. In this way, this is equivalent to that the data processing apparatus obtains the metadata information. In this embodiment of this application, an example in which the data processing apparatus obtains the metadata information of the target data is used for description.

In a possible implementation, the data processing apparatus may include at least one interface, and each of the at least one interface supports one communication protocol. When receiving the write request of the source device, the data processing apparatus may determine a target interface that matches a communication protocol of the source device, and receive the write request from the source device through the target interface. This is equivalent to receiving the target data. The at least one interface may be, for example, configured to support at least one of a Java database connectivity (Java database connectivity, JDBC) protocol, a hypertext transfer protocol (hypertext transfer protocol, HTTP), and a hypertext transfer protocol secure (hypertext transfer protocol secure, HTTPS). In this implementation, the data processing apparatus may select a corresponding interface based on an actual state of the source device, so that the data processing apparatus can smoothly communicate with different devices.

Manner 2: The data processing apparatus may extract a relationship between the plurality of indexes and the at least one group of data corresponding to the plurality of fields associated with each of the plurality of indexes, to obtain the metadata information.

For example, the data processing apparatus may analyze, based on the target data, the relationship between the plurality of indexes and the at least one group of data corresponding to the plurality of fields associated with each of the plurality of indexes, to obtain the metadata information. For example, the data processing apparatus may include a trained model. The data processing apparatus may input the target data into the model, and output, through the model, information about the relationship between the plurality of indexes and the at least one group of data corresponding to the plurality of fields associated with each of the plurality of indexes.

The data processing apparatus may receive the target data from the source device, or may read the target data from the database in the data storage apparatus. For a manner in which the data processing apparatus reads the target data from the data storage apparatus, refer to the foregoing content in which the data processing apparatus obtains the write request from the source device. Details are not described herein again.

Optionally, the data processing apparatus may further write the target data into the database.

In this embodiment of this application, the data processing apparatus may obtain the metadata information and write the target data into the database in any sequence. This is not limited in this embodiment of this application. For example, the data processing apparatus may write the target data into the database after obtaining the metadata information. Alternatively, the data processing apparatus may synchronously obtain the metadata information and write the target data into the database. Alternatively, the data processing apparatus may write the target data into the database, and then obtain the metadata information of the target data.

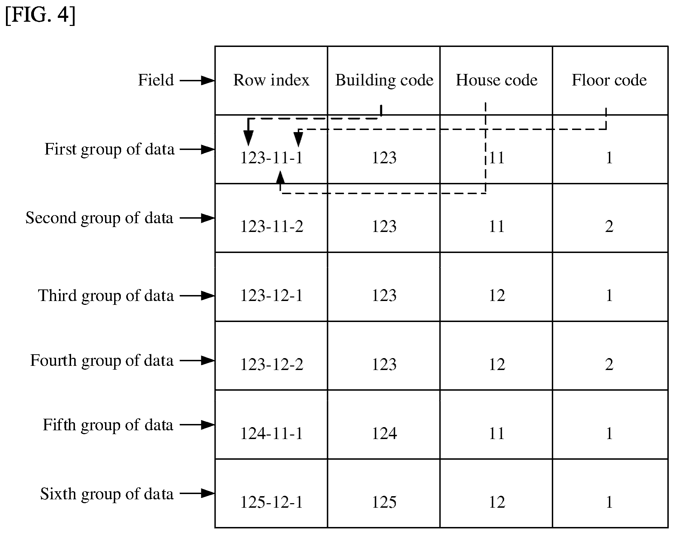

FIG. 4 is a diagram of target data according to an embodiment of this application. In FIG. 4, a form of the target data is a table for illustration. As shown in FIG. 4, the target data includes a plurality of fields and data corresponding to the plurality of fields. The plurality of fields are a row index (rowkey), a building code (building_code), a house code (house_code), and a floor code (floor_code) in FIG. 4. The data corresponding to the plurality of fields includes a first group of data to a sixth group of data shown in FIG. 4.

The first group of data indicates that a row index is 123-11-1, a building code is 123, a house code is 11, and a floor code is 1. The second group of data indicates that a row index is 123-11-2, a building code is 123, a house code is 11, and a floor code is 2. The third group of data indicates that a row index is 123-12-1, a building code is 123, a house code is 12, and a floor code is 1. The fourth group of data indicates that a row index is 123-12-2, a building code is 123, a house code is 12, and a floor code is 2. The fifth group of data indicates that a row index is 124-11-1, a building code is 124, a house code is 11, and a floor code is 1. The sixth group of data indicates that a row index is 125-12-1, a building code is 125, a house code is 12, and a floor code is 1.

For example, the data processing apparatus may analyze the plurality of fields and the first group of data in the table shown in FIG. 4, to determine that the row index in the first group of data is actually formed by sequentially connecting, by using delimiters, data corresponding to three fields: building_code, house_code, and floor_code. Correspondingly, the data processing apparatus may obtain the metadata information. The metadata information indicates that the row index is formed by sequentially connecting, by using the delimiters, the data corresponding to the three fields: building_code, house_code, and floor_code.

If content of query requests is different, manners in which the data processing apparatus determines at least one index corresponding to the query requests are also different. The following separately describes the manners.

Case 1: The query request is the level-1 query request, and the query request indicates the at least one field.

The data processing apparatus may determine, based on the metadata information and the at least one field, an index corresponding to the at least one field, that is, obtain the at least one index. The at least one index is the index corresponding to the query request.

Case 2: The query request is the level-1 query request, and the query request indicates the at least one field and a value range of data corresponding to each of the at least one field.

The data processing apparatus may determine, based on the metadata information and the value range of the data corresponding to each of the at least one field, a value range of an index corresponding to each of the at least one field. The data processing apparatus may use an intersection set of value ranges of indexes corresponding to each of the at least one field as the at least one index.

For example, the database includes the data shown in FIG. 4, the index is obtained by sequentially connecting the data corresponding to the plurality of fields, and the at least one field includes building_code and house_code. The query request indicates building_code = 123 and house_code = 11, and the at least one field indicated by the query request includes building_code and house_code. The data processing apparatus may determine the value range of the index corresponding to each of the at least one field. Specifically, a value range of an index corresponding to building_code = 123 should be an index starting with 123, and a value range of an index corresponding to house_code = 11 should include indexes 11 to 12 (excluding 12). Therefore, it may be determined that the at least one index should be an index including 123 and 11. In other words, the at least one index is 123-11-1 and 123-11-2 shown in FIG. 4.

Case 3: The query request is multi-level query requests, and the query request indicates at least one field.

The data processing apparatus may determine, based on the metadata information and a part of the at least one field indicated by each level of query request in the multi-level query requests, the index corresponding to each level of query request. The data processing apparatus may determine an intersection set of indexes corresponding to each level of query request in the multi-level query requests as the at least one index. The data processing apparatus may separately determine the multi-level query requests from the query request based on the metadata information.

Case 4: The query request is the multi-level query requests, and the query requests indicate at least one field and a value range of each of the at least one field.

The data processing apparatus may determine, based on the value range corresponding to the part of the at least one field indicated by each level of query request in the multi-level query requests, the value range of the level-1 index corresponding to each level of query request, and may obtain the value range of the multi-level indexes through accumulation. The data processing apparatus may determine the intersection set of the value ranges of the multi-level indexes as the at least one index.

Certainly, if the query request directly includes an index, the data processing apparatus may directly use the index to query data corresponding to the index.

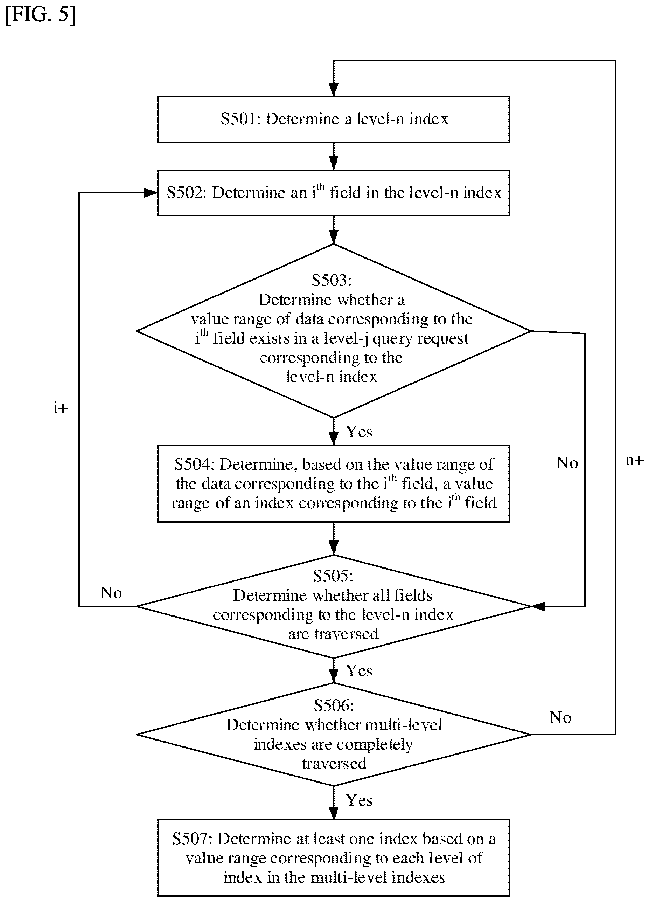

FIG. 5 is a diagram of a method for determining at least one index according to an embodiment of this application.

S501: A data processing apparatus determines a level-n index.

The level-n index is one of multi-level indexes, n is a positive integer, and a maximum value of n is a quantity of the multi-level indexes. For example, the data processing apparatus determines the level-n index based on metadata information.

S502: The data processing apparatus determines an i^{th} field in the level-n index.

The i^{th} field is one of a part of a plurality of fields related to the level-n index. i is a positive integer.

S503: The data processing apparatus determines whether a value range of data corresponding to the i^{th} field exists in a level-j query request corresponding to the level-n index.

If the value range of the data corresponding to the i^{th} field exists in the level-j query request corresponding to the level-n index, the data processing apparatus performs S504, that is, determines, based on the value range of the data corresponding to the i^{th} field, the value range of the index corresponding to the i^{th} field. If the value range of the data corresponding to the i^{th} field does not exist in the level-j query request corresponding to the level-n index, the data processing apparatus may perform S505, that is, determine whether all fields corresponding to the level-n index are traversed.

If the data processing apparatus determines that not all fields corresponding to the level-n index are traversed, the data processing apparatus may increase a value of i (shown by i + in FIG. 5), and continue to perform step S502 on i obtained after increase. If the data processing apparatus determines that all fields corresponding to the level-n index are traversed, the data processing apparatus may perform S506, that is, determine whether the multi-level indexes are completely traversed.

If it is determined that the multi-level indexes are not completely traversed, a value of n (shown by n + in FIG. 5) is increased, and step S501 is performed on the increased n. If it is determined that the multi-level indexes are traversed, the data processing apparatus may perform S507, that is, determine the at least one index based on the value range corresponding to each level of index in the multi-level indexes.

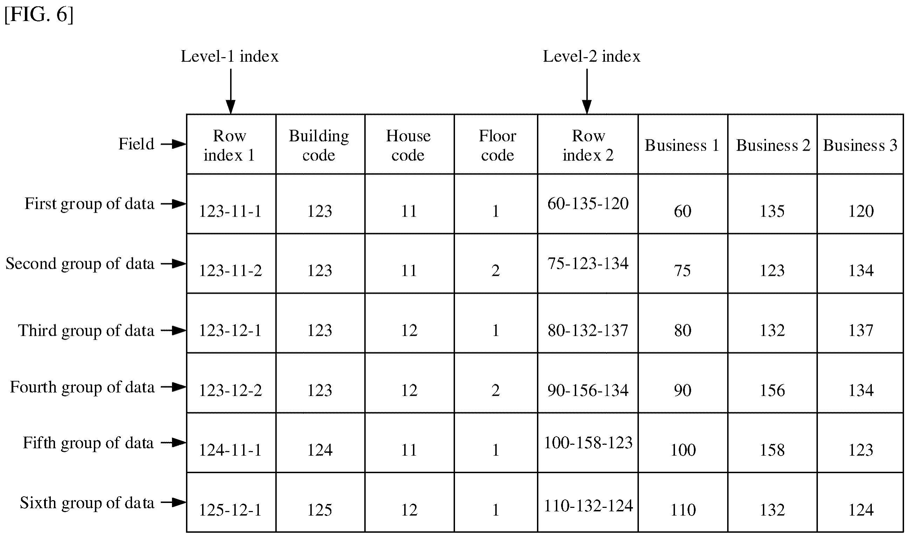

For example, FIG. 6 is a diagram of data included in a database according to an embodiment of this application. As shown in FIG. 6, an example in which a form of the data included in the database is a table is used in FIG. 6. As shown in FIG. 6, the database includes a plurality of fields and data corresponding to the plurality of fields. The plurality of fields are a row index 1 (rowkey1), a building code (building_code), a house code (house_code), a floor code (floor_code), a name (name), a class (class), a row index 2 (rowkey2), a business 1 (business1), a business 2 (business2), and a business 3 (business3) in FIG. 6. The row index 1 may be considered as a level-1 index, and the row index 2 may be considered as a level-2 index. The data corresponding to the plurality of fields includes a first group of data to a sixth group of data shown in FIG. 6.

The first group of data indicates that a row index 1 is 123-11-1, a building code is 123, a house code is 11, a floor code is 1, a row index 2 is 60-135-120, a business 1 is 60, a business 2 is 135, and a business 3 is 120. The second group of data indicates that a row index 1 is 123-11-2, a building code is 123, a house code is 11, a floor code is 2, a row index 2 is 75-123-134, a business 1 is 75, a business 2 is 123, and a business 3 is 134. The third group of data indicates that a row index 1 is 123-12-1, a building code is 123, a house code is 12, a floor code is 1, a row index 2 is 80-132-137, a business 1 is 80, a business 2 is 132, and a business 3 is 137. The fourth group of data indicates that a row index 1 is 123-12-2, a building code is 123, a house code is 12, a floor code is 2, a row index 2 is 90-156-134, a business 1 is 90, a business 2 is 156, and a business 3 is 134. The fifth group of data indicates that a row index 1 is 124-11-1, a building code is 124, a house code is 11, a floor code is 1, a row index 2 is 100-158-123, a business 1 is 100, a business 2 is 158, and a business 3 is 123. The sixth group of data indicates that a row index 1 is 125-12-1, a building code is 125, a house code is 12, a floor code is 1, a row index 2 is 110-132-124, a business 1 is 110, a business 2 is 132, and a business 3 is 124.

For example, the data included in the database is the data shown in FIG. 6, the index is obtained by sequentially connecting the data corresponding to the plurality of fields, a query request includes multi-level query, and the multi-level query requests indicate class < 3 and businmessl < 80. A level-1 query request may be class < 3, and a level-2 query request may be businmessl < 80.

The data processing apparatus may determine a value range of an index corresponding to the level-1 query request. Specifically, a value range of an index corresponding to class < 3 is an index that is in the row index 1 and whose corresponding value of class is less than 5. A value range of an index corresponding to businmess1 < 80 is an index that is in the row index 2 and whose corresponding value of businmess1 is less than 80. The data processing apparatus may determine that the at least one index is an index that is in the row index 1 and whose value corresponding to class is less than 5. In addition, an index that is in the row index 2 and whose value corresponding to businmess1 is less than 80 specifically includes 123-11-1 and 60-135-120 in the row index 1 and 60-135-120 and 75-123-134 in the row index 2 in FIG. 6.

S303: The data processing apparatus queries N groups of data corresponding to the at least one index. N is a positive integer.

After determining the at least one index, the data processing apparatus may query the database for the N groups of data corresponding to the at least one index. When quantities of tables included in the database are different, manners in which the data processing apparatus determines the N groups of data are also different. The following separately describes the manners.
1. The quantity of tables included in the database is 1.
   The data processing apparatus may directly determine, from the table, one group of data corresponding to each of the at least one index, to obtain the N groups of data in total.
2. The quantity of tables included in the database is greater than 1.

In a possible implementation, the data processing apparatus may separately determine, from the plurality of tables included in the database, one group of data corresponding to each of the at least one index, to obtain the N groups of data in total.

In another possible implementation, the data processing apparatus may determine, from a table (a first table is used as an example in this embodiment of this application) with a smallest data amount in the plurality of tables, a group of data corresponding to each of the at least one index, to obtain K groups of data in total, where K is a positive integer. The data processing apparatus queries, based on the K groups of data, another table (a table other than the first table in the plurality of tables) for L groups of data that are the same as each of the K groups of data, to obtain the N groups of data. In other words, the N groups of data include the K groups of data and the L groups of data. L is a non-negative integer. The table other than the first table in the plurality of tables includes, for example, a second table.

In this implementation, the data processing apparatus may query, based on a query result of a table with a small data amount, data in a table with a large data amount. This is equivalent to performing query by joining the plurality of tables. In this way, the data processing apparatus may query, by using a query result of a table with the small data amount, data in a table with the large data amount. In this way, data query efficiency is improved.

Optionally, the data processing apparatus may include a plurality of threads, and each of the plurality of threads is configured to query data from one of the plurality of tables. Alternatively, it may be described as that each of the plurality of threads corresponds to one of the plurality of tables. In this way, the data processing apparatus may query data by using the plurality of threads, thereby improving data query efficiency.

Before the data processing apparatus queries the table other than the first table in the plurality of tables for the L groups of data that are the same as the K groups of data, a thread (for example, a first thread) corresponding to the first table may send the K groups of data to another thread. In this way, the another thread may query, from another table, data that is the same as the K groups of data.

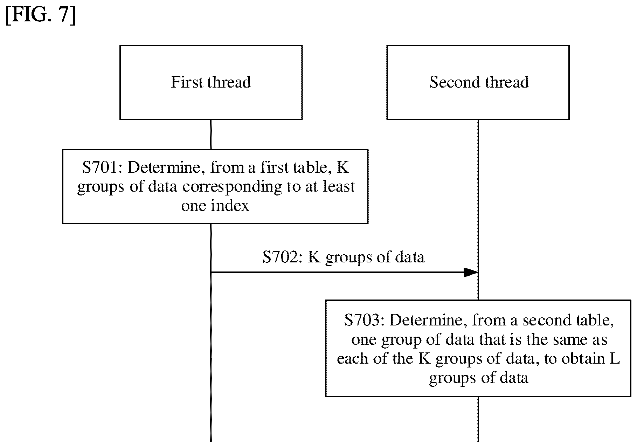

The following uses an example in which the plurality of tables include the first table and the second table, the data processing apparatus includes the first thread and a second thread, the first thread is used to query data from the first table, the second thread is used to query data from the second table, and a data amount of the first table is less than a data amount of the second table, to describe a process in which the data processing apparatus determines the N groups of data from the first table and the second table. FIG. 7 is a diagram of a method for determining N groups of data according to an embodiment of this application.

S701: The first thread determines, from the first table, the K groups of data corresponding to the at least one index.

S702: The first thread sends the K groups of data to the second thread. Correspondingly, the second thread receives the K groups of data from the first thread.

S703: The second thread determines, from the second table, one group of data that is the same as each of the K groups of data, to obtain the L groups of data.

In this way, the data processing apparatus may obtain the K groups of data from the first thread, and obtain the L groups of data from the second thread, to obtain the N groups of data.

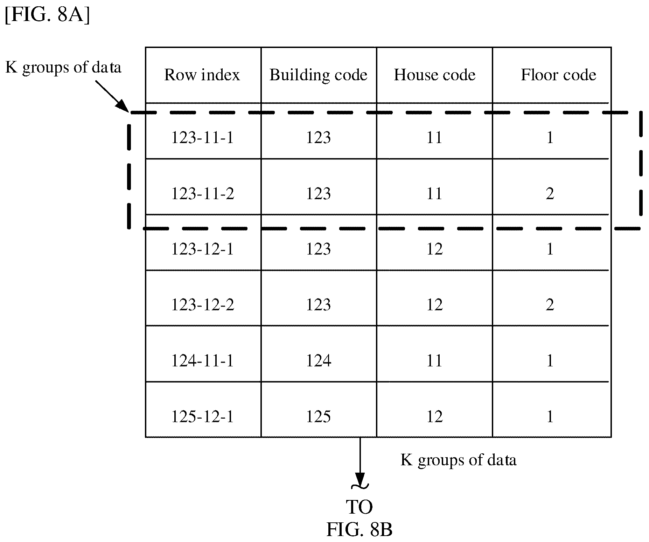

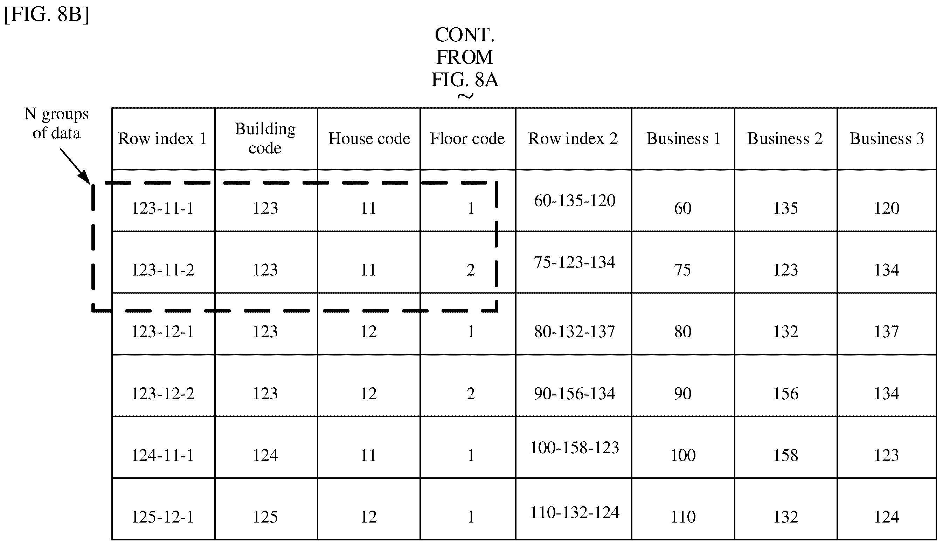

For example, the first table is the table shown in FIG. 4, the second table is the table shown in FIG. 6, and the at least one index includes 123-11-1 and 123-11-2. FIG. 8A and FIG. 8B are a diagram of a process of joining tables for data query according to an embodiment of this application. The data processing apparatus may determine that the data amount of the first table is smaller. Therefore, the data processing apparatus may query, through the first thread, the first table for the K groups of data that meet the at least one index, including the first group of data and the second group of data in the first table. The first thread may send the K groups of data to the second thread. The data processing apparatus may query, through the second thread, the second table for the L groups of data that are the same as the K groups of data, where the L groups of data include the first group of data and the second group of data in the second table.

It is assumed that the first table includes 10,000 rows of data, and the second table includes 100 million rows of data. According to the solution in this embodiment of this application, after obtaining the first group of data and the second group of data in the first table, the data processing apparatus may directly scan the first group of data and the second group of data in the second table. This is equivalent to that the data processing apparatus scans only two rows of data. In this way, data that needs to be scanned by the data processing apparatus can be reduced, thereby improving efficiency of querying the data by the data processing apparatus from the second table, and improving overall efficiency of querying data.

S304: The data processing apparatus sends the query result to the first terminal device. Correspondingly, the first terminal device receives the query request from the data processing apparatus.

After obtaining the N groups of data, the data processing apparatus may send a query request to the first terminal device, where the query request indicates the N groups of data.

In this embodiment of this application, the data processing apparatus may determine, based on the query request, the at least one index corresponding to the query request. This is equivalent to that the data processing apparatus may sense a relationship between the query request and the index. In this way, the data processing apparatus may subsequently directly query the data based on the at least one index without traversing all data in the database. In this way, the data that meets the query request is determined, so that a search range for querying the data by the data processing apparatus is reduced. This helps improve data query efficiency of the data processing apparatus, that is, improves data query efficiency of the data processing apparatus, and helps feed back queried data to the user more quickly, thereby improving user experience. In addition, in this embodiment of this application, the data processing apparatus may further join a plurality of tables in the database to query data, instead of performing independent query process on each table. This also helps improve data query efficiency. The method in this embodiment of this application is applicable to a scenario in which massive data is queried for. In this scenario, the method in this embodiment of this application is applied, so that a data search range can be greatly narrowed down, a processing amount of the data processing apparatus can be reduced, and data query efficiency can be greatly improved.

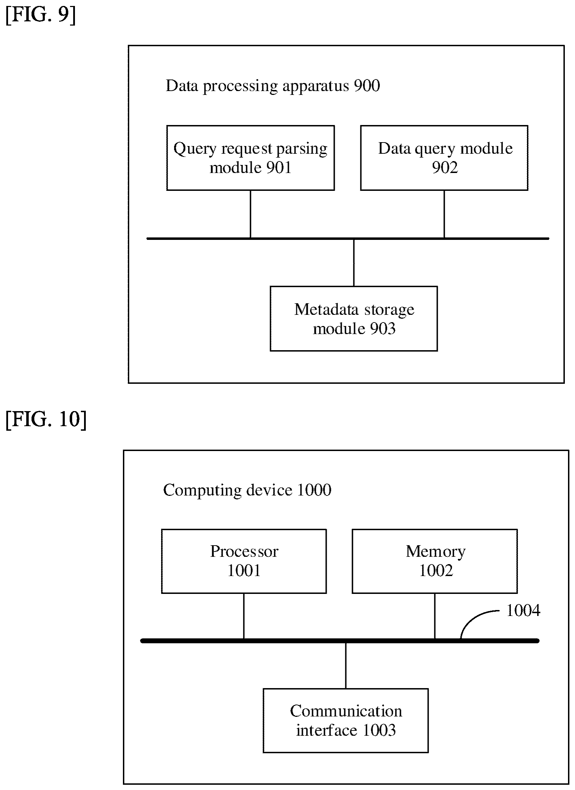

An embodiment of this application provides a data processing apparatus. The data processing apparatus may be configured to implement a function of any one of the foregoing data processing apparatuses, and correspondingly, may also perform the steps performed by the foregoing data processing apparatus. FIG. 9 is a diagram of a structure of a data processing apparatus according to an embodiment of this application.

As shown in FIG. 9, a data processing apparatus 900 includes a query request parsing module 901 and a data query module 902. Optionally, the data processing apparatus 900 further includes a metadata storage module 903.

The query request parsing module 901, the data query module 902, and the metadata storage module 903 may all be implemented by using software, or may be implemented by using hardware. For example, the following uses the query request parsing module 901 as an example to describe an implementation of the query request parsing module 901. Similarly, for implementations of the data query module 902 and the metadata storage module 903, refer to the implementation of the query request parsing module 901.

The module is used as an example of a software functional unit, and the query request parsing module 901 may include code run on a computing instance. The computing instance may include at least one of a physical host (computing device), a virtual machine, and a container. Further, there may be one or more computing instances. For example, the query request parsing module 901 may include code running on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

The module is used as an example of a hardware functional unit, and the query request parsing module 901 may include at least one computing device, for example, a server. Alternatively, the query request parsing module 901 may be implemented by using an application-specific integrated circuit (application-specific integrated circuit, ASIC), a device implemented by using a programmable logic device (programmable logic device, PLD), or the like. The PLD may be implemented by a complex programmable logical device (complex programmable logical device, CPLD), a field-programmable gate array (field-programmable gate array, FPGA), generic array logic (generic array logic, GAL), or any combination thereof.

A plurality of computing devices included in the query request parsing module 901 may be distributed in a same region, or may be distributed in different regions. The plurality of computing devices included in the query request parsing module 901 may be distributed in a same AZ, or may be distributed in different AZs. Similarly, the plurality of computing devices included in the query request parsing module 901 may be distributed in a same VPC, or may be distributed in a plurality of VPCs. The plurality of computing devices may be any combination of computing devices such as a server, an ASIC, a PLD, a CPLD, an FPGA, and GAL.

For example, the query request parsing module 901 may be configured to perform steps S301, S302, and S304, and the data query module 902 may be configured to perform step S303.

Optionally, the metadata storage module 903 is configured to obtain and store metadata information. For specific content of each step and content of the metadata information, refer to the foregoing descriptions. Details are not described herein again.

An embodiment of this application provides a computing device. FIG. 10 is a diagram of a structure of a computing device 1000 according to an embodiment of this application. As shown in FIG. 10, the computing device 1000 includes a processor 1001 and a memory 1002. The processor 1001 and the memory 1002 may be coupled or integrated, or the processor 1001 and the memory 1002 may be disposed relatively independently. Optionally, the computing device 1000 further includes a communication interface 1003. The communication interface 1003 uses a transceiver module, for example, but not limited to, a network interface card or a transceiver, to implement communication between the computing device 1000 and another device or a communication network.

The processor 1001, the memory 1002, and the communication interface 1003 may communicate with each other through a bus 1004. The computing device 1000 may be a server or a terminal device. It should be understood that a quantity of processors 1001 and a quantity of memories 1002 in the computing device 1000 are not limited in this embodiment of this application.

The bus 1004 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 10. However, it does not mean that there is only one bus or only one type of bus. The bus 1004 may include a path for transmitting information between components (for example, the processor 1001, the memory 1002, and the communication interface 1003) of the computing device 1000.

The processor 1001 may include any one or more of processors such as a central processing unit (central processing unit, CPU), a graphics processing unit (graphics processing unit, GPU), a micro processor (micro processor, MP), or a digital signal processor (digital signal processor, DSP).

The memory 1002 may include a volatile memory (volatile memory), for example, a random access memory (random access memory, RAM). The memory 1002 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1002 stores executable program code, and the processor 1001 executes the executable program code to separately implement functions of the query request parsing module 901, the data query module 902, and the metadata storage module 903 in FIG. 9, to implement any one of the foregoing data processing methods. In other words, the memory 1002 stores instructions used to perform any data processing method. For functions of the query request parsing module 901, the data query module 902, and the metadata storage module 903, refer to the content described in FIG. 9.

Alternatively, the memory 1002 stores executable code, and the processor 1001 executes the executable code to separately implement functions of the foregoing computing device, to implement any one of the foregoing data processing methods. In other words, the memory 1002 stores instructions used to perform any one of the foregoing data processing methods.

An embodiment of this application further provides a computing device cluster. The computing device cluster includes at least one computing device. Each of the at least one computing device may be a server, for example, a central server, an edge server, or a local server in a local data center. In some embodiments, the computing device may alternatively be a terminal device such as a desktop computer, a notebook computer, or a smartphone.

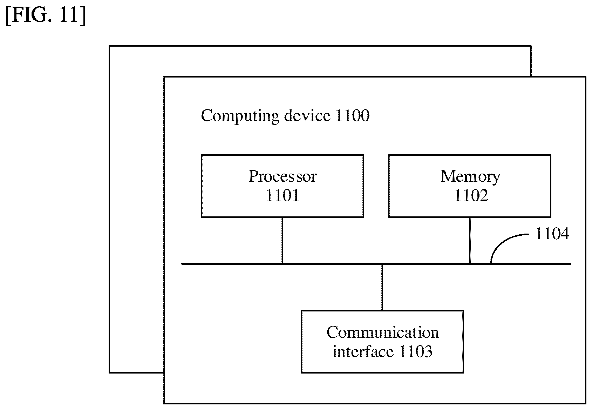

FIG. 11 is a diagram of a structure of a computing device cluster according to an embodiment of this application. As shown in FIG. 11, the computing device cluster includes at least one computing device 1100. Each computing device 1100 in the computing device cluster may include a processor 1101 and a memory 1102. Optionally, each computing device 1100 in the computing device cluster further includes a communication interface 1103. The processor 1101, the memory 1102, and the communication interface 1103 may be connected through a bus 1104. For an implementation of the processor 1101, refer to content of the processor 1001 in FIG. 10. For an implementation of the memory 1102, refer to content of the memory 1002 in FIG. 10. For an implementation of the communication interface 1103, refer to content of the communication interface 1003 in FIG. 10. For an implementation of the bus 1104, refer to content of the bus 1004 in FIG. 10.

In a possible implementation, the memory 1102 in each computing device 1100 in the computing device cluster may store same instructions used to perform any one of the foregoing data processing methods.

In another possible implementation, the memory 1102 of the at least one computing device 1100 in the computing device cluster may alternatively store some instructions used to perform any one of the foregoing data processing methods. In other words, a combination of the at least one computing device 1100 may jointly execute instructions used to perform any one of the foregoing data processing methods.

Optionally, memories 1102 in different computing devices 1100 in the computing device cluster may store different instructions, and the different instructions are respectively used to perform some functions of the data processing apparatus 900 in FIG. 9. In other words, the instructions stored in the memories 1102 in different computing devices 1100 may implement functions of one or more of the query request parsing module 901, the data query module 902, and the metadata storage module 903 in FIG. 9. For functions of the query request parsing module 901, the data query module 902, and the metadata storage module 903, refer to the content described in FIG. 9.

In some possible implementations, the at least one computing device 1100 in the computing device cluster may be connected through a network. The network may be a wide area network, a local area network, or the like. Specifically, the computing device 1100 is connected to the network by using the communication interface 1103 in each computing device 1100. In this possible implementation, at least one computing device 1100 in the computing device cluster may jointly perform any one of the foregoing data processing methods.

An embodiment of this application provides a chip system. The chip system includes a processor and an interface. The processor is configured to invoke instructions from the interface and run the instructions. When the processor executes the instructions, the data processing method according to any one of the foregoing implementations is implemented.

An embodiment of this application provides a computer-readable storage medium. The computer-readable storage medium is configured to store a computer program or instructions. When the computer program or the instructions are run, any one of the foregoing data processing methods is implemented. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state disk), or the like.

An embodiment of this application provides a computer program product including instructions. When the computer program product runs on a computer, any one of the foregoing data processing methods is implemented. The computer program product may be software or a program product that includes the instructions and that can be run on a computing device or stored in any usable medium.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A data processing method, applied to a data processing apparatus, wherein the method comprises:
Receiving a query request, wherein the query request indicates at least one field to which to-be-queried data belongs;
determining, based on metadata information, at least one index corresponding to the query request, wherein the metadata information indicates a relationship between an index and data corresponding to a plurality of fields, and the plurality of fields comprise the at least one field;
querying, from a database, N groups of data associated with the at least one index, wherein the database comprises a plurality of indexes and at least one group of data corresponding to the plurality of fields associated with each of the plurality of indexes, the plurality of indexes are ordered in the database, and N is a positive integer; and
sending a query result, wherein the query result indicates the N groups of data.

2. The method according to claim 1, wherein the database comprises a first table and a second table, the first table and the second table are configured to store the plurality of indexes and the at least one group of data corresponding to the plurality of fields associated with each of the plurality of indexes, and a data amount of the first table is less than a data amount of the second table; and querying, from the database, the N groups of data associated with the at least one index comprises:
querying, from the first table, a group of data associated with each of the at least one index, to obtain K groups of data in total, wherein K is a positive integer; and
querying, from the second table, a group of data that is the same as each of the K groups of data, to obtain L groups of data in total, wherein L is a non-negative integer, and the N groups of data comprise the K groups of data and the L groups of data.

3. The method according to claim 2, wherein the data processing apparatus comprises a first thread and a second thread, and the first thread is configured to query, from the first table, the group of data associated with each of the at least one index; and querying, from the second table, the group of data that is the same as each of the K groups of data comprises:
sending the K groups of data to the second thread through the first thread; and
querying, through the second thread from the second table, the group of data that is the same as each of the K groups of data.

4. The method according to any one of claims 1 to 3, wherein before determining, based on the metadata information, the at least one index corresponding to the query request, the method further comprises:
receiving the plurality of indexes and the at least one group of data corresponding to the plurality of fields associated with each of the plurality of indexes; and
extracting a relationship between the plurality of indexes and the at least one group of data corresponding to the plurality of fields, to obtain the metadata information, and storing the metadata information.

5. The method according to any one of claims 1 to 4, wherein the query request
comprises multi-level query requests, each level of query request in the multi-level query requests indicates a part of the at least one field, the metadata information indicates a relationship between each level of index in multi-level indexes and data corresponding to a part of the plurality of fields, and each level of query request in the multi-level query requests corresponds to a level-1 index in the multi-level indexes; and
determining, based on the metadata information, the at least one index corresponding to the query request comprises:
determining, based on the relationship between each level of index in the multi-level indexes and the part of the plurality of fields, a value range of the level-1 index corresponding to each level of query request in the multi-level query requests, and obtaining value ranges of the multi-level index in total, wherein the at least one index is an intersection of the value ranges of the multi-level indexes.

6. The method according to claim 5, wherein each level of query request further indicates a value range of data corresponding to the part of the at least one field; and determining the value range of the level-1 index corresponding to each level of query request in the multi-level query requests comprises:
determining, based on a value range of data corresponding to each field in the part of the at least one field indicated by each level of query request, the value range of the level-1 index corresponding to each level of query request.

7. A data processing apparatus, comprising:
a query request parsing module, configured to: receive a query request, wherein the query request indicates at least one field to which to-be-queried data belongs; and determine, based on metadata information, at least one index corresponding to the query request, wherein the metadata information indicates a relationship between an index and data corresponding to a plurality of fields, and the plurality of fields comprise the at least one field; and
a data query module, configured to query, from a database, N groups of data associated with the at least one index, wherein the database comprises a plurality of indexes and at least one group of data corresponding to the plurality of fields associated with each of the plurality of indexes, the plurality of indexes are ordered in the database, and N is a positive integer, wherein
the query request parsing module is further configured to send a query result, wherein the query result indicates the N groups of data.

8. The apparatus according to claim 7, wherein the database comprises a first table and a second table, the first table and the second table are configured to store the plurality of indexes and the at least one group of data corresponding to the plurality of fields associated with each of the plurality of indexes, and a data amount of the first table is less than a data amount of the second table; and the data query module is specifically configured to:
Query, from the first table, a group of data associated with each of the at least one index, to obtain K groups of data in total, wherein K is a positive integer; and
query, from the second table, a group of data that is the same as each of the K groups of data, to obtain L groups of data in total, wherein L is a non-negative integer, and the N groups of data comprise the K groups of data and the L groups of data.

9. The apparatus according to claim 8, wherein the data query module is specifically configured to:
query, through a first thread from the first table, the group of data associated with each of the at least one index, to obtain the K groups of data, and send the K groups of data to a second thread; and
query, through the second thread from the second table, the group of data that is the same as each of the K groups of data.

10. The apparatus according to any one of claims 7 to 9, wherein the apparatus further comprises a metadata storage module, and the metadata storage module is configured to:
receive the plurality of indexes and the at least one group of data corresponding to the plurality of fields associated with each of the plurality of indexes; and
extract a relationship between the plurality of indexes and the at least one group of data corresponding to the plurality of fields, to obtain the metadata information, and store the metadata information.

11. The apparatus according to any one of claims 7 to 10, wherein the query request comprises multi-level query requests, each level of query request in the multi-level query requests indicates a part of the at least one field, the metadata information indicates a relationship between each level of index in multi-level indexes and data corresponding to a part of the plurality of fields, and each level of query request in the multi-level query requests corresponds to a level-1 index in the multi-level indexes; and the query request parsing module is specifically configured to:
determine, based on the relationship between each level of index in the multi-level indexes and the part of the plurality of fields, a value range of the level-1 index corresponding to each level of query request in the multi-level query requests, and obtain value ranges of the multi-level index in total, wherein the at least one index is an intersection of the value ranges of the multi-level indexes.

12. The apparatus according to claim 11, wherein each level of query request further indicates a value range of data corresponding to the part of the at least one field, and the query request parsing module is specifically configured to:
determine, based on a value range of data corresponding to each field in the part of the at least one field indicated by each level of query request, the value range of the level-1 index corresponding to each level of query request.

13. A computing device, comprising a processor and a memory, wherein the memory is configured to store one or more computer programs, the one or more computer programs comprise computer-executable instructions, and when the computing device runs, the processor executes the one or more computer programs stored in the memory, to enable the computing device to perform the method according to any one of claims 1 to 6.

14. A computing device, comprising a processor and a memory, wherein the memory is configured to store one or more computer programs, the one or more computer programs comprise computer instructions, and when the processor executes the computer instructions, the method according to any one of claims 1 to 6 is performed.

15. A computing device cluster, comprising at least one computing device, wherein
each computing device comprises a processor and a memory; and
the processor of the at least one computing device is configured to execute instructions stored in the memory of the at least one computing device, to enable the computing device cluster to perform the method according to any one of claims 1 to 6.

16. A computer-readable storage medium, wherein the storage medium stores a computer program or instructions, and when the computer program or the instructions are executed by a communication apparatus, the method according to any one of claims 1 to 6 is implemented.
